# EUROPEAN PATENT APPLICATION

(11) **EP 1 320 037 A1**
(43) Date of publication of application: **18.06.2003**
(21) Application number: 01460078.7
(22) Date of filing: 11.12.2001
(51) Int. Cl.: G06F 17/30

(54) **Storage device**

(71) Applicant: Thomson Licensing S.A., 92100 Boulogne-Billancourt (FR)
(72) Inventor: Chapel, Claude, 92648 Boulogne Cedex (FR); Guillemot, Jean-Charles, 92648 Boulogne Cedex (FR); Leroux, Jean, 92648 Boulogne Cedex (FR)
(74) Representative: Browaeys, Jean-Philippe

(57) **Abstract**

The invention concerns a storage device (2) comprising storage means (8) characterized in that it comprises
- file system manager means (6) for managing the organization of the data stored on the storage means (8),
- interface means (4, 5) enabling a host (1) to access the storage means (8) by sending remote procedures calls (7) to the file system means (6).

Application to multimedia terminals and especially to digital television receivers or set-top box.

## Description

The invention concerns a storage device. It can be used in, but is not limited to, multimedia terminals such as set-top boxes or digital television sets.

The evolution of the embedded terminal market, and especially of multimedia terminals, such as Digital TV decoders for instance, has stressed the point that such multimedia terminals require high storage capacity, quality and performances at lower cost and higher integration.

The hard disk drive technology has been driven by the personal computers market needs and has been evolving steadily.

The design of known hard disk drive storage systems is based on the personal computers architecture and the access of the hard disk is fully controlled by the computer operating system and its integrated file system. Such architecture is well known

However, despite its common use in the embedded domain, the actual architecture of personal computers is not compliant with the needs and the expected performances of multimedia devices. Multimedia devices manage data such as voice or video that require high bandwidth and high performances in terms of access.

In particular, in the common architecture of devices or peripherals each device or peripheral has to be controlled by the host system.

The invention proposes a storage device comprising storage means characterized in that it comprises
- file system manager means for managing the organization of the data stored on the storage means,
- interface means enabling a host to access the storage means by sending remote procedures calls to the file system means.

The invention proposes a file system, which is not part of the host, accessible by simple commands by an external device, such as a host, in order to store or read data.

All the accesses to the storage means are controlled by the file system manager means. This file system manager means are accessible by simple command calls, which correspond to high level commands such as read or write a given file. The access to the storage means is then managed by the file system itself, without intervention of the host.

The file system is located close to the storage means and thus the interface between the storage means and the host device does not transport the same types of commands as it transports in known systems.

The interface between the storage device and the host is not a separation between the intelligence (i.e the file management) on the host side and the slave device on the other side of the interface. Part of the intelligence is moved to the slave device.

Thus the storage device is a more intelligent device and the host device's workload is decreased as it does not deal with the file system itsel, but just sends simple commands such as procedure calls, which indicate to the file system which file must be accessed.

The system designer has just to program the generation of these high level functions or procedure calls, which are then transferred by the host through the interface means to the file system manager means, which then manages the accesses to the file system.

In a preferred embodiment, the storage device comprises cache memory shared between the storage means and the host, the cache memory being loaded upon control of the file system manager means.

Storage means can include a storage medium, a cache memory and firmware for controlling the cache memory and the storage means.

In known systems, the cache memory included in all storage means is managed by the firmware managing the storage medium.

However, this is not efficient in terms of cache hits as the storage means is not aware of the next accesses done by the host, as it is not aware of the organization of the data on the storage medium, since in known systems, the file system lies with the host. The cache prefetch process in known systems is based on statistics on the last accesses done by the host. In order to obtain a good proportion of cache hits (e.g data requested by the host is present in the cache before the request by the host), the designers are thus obliged to provide relatively large amount cache memory.

The inventors have found particularly interesting to implement a cache prefetch process that makes to the firmware managing the storage medium carry out cache prefetching at a given address. In read mode, if the requested file comprises video data, the video data can be stored in several sectors. The file system is aware of this organization or fragmentation and thus can provide the address of the next sector where the continuation of the file is located. Thus, the size of the cache memory may be decreased without reducing the probability of cache hits.

This cache prefetch is a cognitive prefetch by opposition to the statistic prefetch used by traditional prefetch processes controlled by the storage device firmware and not by the file system and based on the most recent access and not on the real location of data on the disk.

According to an embodiment of the invention, the file system manager means control the cache memory prefetch during the accesses in read mode.

According to an embodiment of the invention, the file system manager means is configured to send a write cache command to the cache memory in order that data to be stored on the storage medium are first stored in the cache memory during access in write mode and transferred from the cache memory to the storage medium when the cache memory filling in has reached a predetermined level.

Such a write cache command indicates to store the data in the cache memory without transferring them immediately to the the storage medium. Such a write command is efficient in order to transfer a large amount of data from the host to the storage medium.

Known hard disk drives are designed with a cache write enable feature. However, this function does not drive the transfers from the cache memory to the hard disk drive and when data are sent to the cache memory they are then transferred immediately to the hard disk drive, which is costly in terms of head moves. Such a known cache write feature is thus not adapted to large burst transfers as the head of the drive has to move at each transfer.

With a write cache command as proposed by the invention, the data transfer to the cache memory are done using the cache memory and when the cache memory filling in has reached a predetermined level, the data are transferred to the storage medium. Thus the disk head moves only when a predetermined quantity of data is stored in the cache memory.

According to an embodiment, the storage device comprises segmentation means to partition the cache into several segments according to the number of simultaneous accesses to the storage means.

In case of requests relating to a plurality of different files; to the storage means, in order to improve the chance of cache hits, it can be worthwhile to share the cache memory into segments in order to load the cache memory with the different requested files.

According to an embodiment, the file system means feature a first type of storage unit for storing audio and/or video streams and a second type of storage unit for storing non-stream data, wherein the size of the first storage unit is a multiple of the size of the second storage unit, and that it further comprises means for allocating a unit of the first type either for stream storage or to split a unit of the first type into a plurality of units of the second type, for storage of non-stream data.

File systems are used to store and organize data on a storage medium such as a hard disk, other types of storage media not being excluded (e.g optical discs, magneto-optical discs, solid-state memories...). Known file systems are optimised for traditional information data constraints: in particular, they use logical data blocks (basic unit for disk space allocation), which are rather small (of the order of magnitude of the disk sector size) in order to optimise the efficiency of disk space use.

For a digital video stream, such file systems may not offer satisfactory performances. The small size of the logical blocks may lead to file fragmentation. As a consequence, the disk head may often move from one logical block to another and may therefore be proportionally less used for direct read operation. This leads to a decrease of the global available bandwidth. In other words, the file system decreases the performances of the hard disk itself.

The storage device can store informative data (non-stream data, such as asynchronous files : electronic program guide data, program code, databases...) or audio/video data (stream or isochronous data) in an efficient manner, avoiding a fragmentation of the storage, without defining a fixed area for asynchronous data and a fixed area for audio/video stream data.

According to an embodiment, the interface means transport the remote procedures calls from a host storage application to the file system manager means.

The host device and the storage device are linked through an interface enabling them to communicate and exchange data and the remote procedures calls can be sent using an existing interface between the two devices.

According to an embodiment, the interface means are serial type interface means.

According to an embodiment, the interface means are compliant with the Serial Advanced Technology Attachment standard.

The Serial Advanced Technology Attachment standard (SATA) interface brings major benefits, as being a high level protocol, especially compared to the Parallel Advanced Technology Attachment (PATA) interface.

According to an embodiment, the interface means transport the remote procedures calls from a host storage application to the file system manager means by encapsulating them in a Frame Information Structure field.

In a preferred embodiment, a Frame Information Structure is defined in the context of SATA. In order to be compliant with the SATA standard, the inventors have found that it would be particularly suitable to encapsulate the API in the transport layer and therefore propose to use a FIS for sending the remote procedures calls.

Another object of the invention is a multimedia terminal, preferentially a set-top box, characterized in that it includes a storage device according to any of the embodiment of the invention.

Other characteristics and advantages of the invention will appear through the description of a non-limiting embodiment of the invention, which will be illustrated, with the help of the enclosed drawings among which:
- figure 1 is a block diagram of a system including a host device and a storage device according to the embodiment of the invention,
- figure 2 is a block diagram representing an embodiment of the interface between the file system and a host storage application,
- figure 3 represents an overview of the cache prefetch by the file system.

The present embodiment is based on interface means compliant with the Serial Advanced Technology Attachment standard defined in the document "serial ATA, revision 1.0, 29 August 2001". It is also related to the storage of video data on a recording medium and in the present embodiment, the storage medium is a hard disk but could be of any other type. The invention is of course not limited to video data type or to the context defined above.

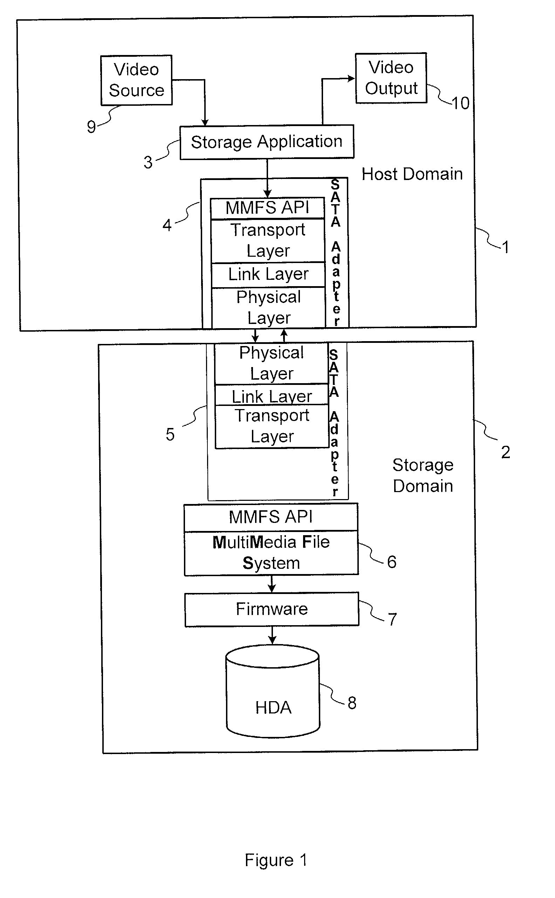

Figure 1 represents a host device 1 and a storage device 2 according to an embodiment of the invention.

Figure 1 gives a functional description of the host device and of the storage device. The host device comprises a storage application 3, an interface 4, a video source 9 and a video output 10.

The storage device 2 comprises an interface 5, a multimedia file system 6, a firmware program 7 and a hard disk assembly 8. The hard disk assembly 8 includes at least the storage medium, being a hard disk in the given embodiment, and the cache memory.

For designers of embedded systems, it is very convenient to be provided with a storage device including a file system when the interface enables a host to access the storage means by sending remote procedures calls to the file system means. According to the present embodiment, the storage device is delivered as an autonomous entity controlled through a simple interface by passing procedure calls and thus reduces the work required for integration. This enables the designers to get the best of a hard disk drive without any expertise in the domain.

Preferentially, the interface includes an Application Programming Interface (API).

The storage device 2 is provided as a stand-alone and highly integrated storage device where all the software that manages the files and the hard disk assembly controller is embedded.

The hard disk assembly 8 is intended to store video data (as well as audio data) from the video source 9 or any other data provided to the storage application 3 called non video data or informative data. The video source 9 can be of any type such as a broadcast program for instance and can be a stream coded according to the MPEG-2 or MPEG-4 standards. The hard disk assembly 8 is also intended to be read by the storage application 3 in order to provide data to the video output 10. The video output 10 can be an external connection, e.g to a TV display or to any other means that can receive or process video type data.

The host device 1 can either read or store data (informative data or video data) on the hard disk assembly 8. It can read data destined to the video output on the hard disk assembly 8 or send data, more or less processed and coming from the video source, to the hard disk assembly 8 coming from the video source 9.

When the host device 1 wants to store data on the hard disk assembly 8, the storage application 3 sends command calls to the multimedia file system 6 of the storage device 2 via the interface 4 on the host device 1 and the interface 5 of the storage device 2.

The storage application 3 receives this video stream from a video source 9. The storage application 3 has to store the video stream on the hard disk assembly 8.

The interface 4 and the interface 5 are of the same type in order to enable the communication between the host device 1 and the storage device 2. As mentioned above, in the present embodiment, these interfaces are compliant with the Serial Advanced Technology Attachment (SATA) standard.

The SATA protocol defines three layers: physical, link and transport layers.

The SATA protocol provides a relatively high integration and sufficiently high-speed interface for the consumer market. Other interface types such as for instance the Parallel Advanced Technology Attachment (PATA) can also provide a high-speed interface but provides less integration facilities than the SATA interface. The SATA interface is designed to be compatible with the PATA interface.

In another embodiment of the invention, several types of interfaces are implemented on the storage device, preferably both PATA and SATA, as SATA is software transparent and SATA drivers are compatible with PATA.

The link layer encapsulates frames received from the transport layer and transmits the encapsulated frames.

The link layer also transmits primitives based on control signals from the transport layer, and receives primitives from the physical layer, which are converted to control signals to the transport layer. The link layer needs not be cognizant of the content of frames.

The transport layer constructs Frame Information Structures (FIS) for transmission and decomposes received FIS. Host and storage device transport layers differ in that the source of the FIS content differs.

In the given embodiment, the host device 1 and the storage device 2 are physically independent, i.e can be separated.

According to a variant of the embodiment, the storage device 2 and the host device 1 can be for instance mounted on the same printed circuit board just physically separated by a connector.

The interface 4 and the interface 5 are interface means enabling the transfer of remote procedures calls from the host device 1 to the storage device 2.

The interface 4 includes an API. The API enables the procedure calls 7 between the host device 1 and the storage device 2.

The inventors have found that it would be particularly suitable to encapsulate the API in the transport layer.

The API is defined as a new FIS category. This FIS provides a structure description that the API procedure calls.

The interface 5 on the storage device 1 decomposes the received FIS.

Namely, it extracts the API command call from the API FIS in order to transmit the API command call to the multimedia file system 6.

The multimedia file system 6 is particularly suitable for the common storage of video data and informative data.

Such a file system dedicated for storing, on the same recording medium, video data and informative data features a first type of storage unit for storing audio and/or video streams and a second type of storage unit for storing non-stream data, wherein the size of the first storage unit is a multiple of the size of the second storage unit. A unit of the first type is allocated either for stream storage or is split into a plurality of units of the second type, for storage of non-stream data.

In one embodiment of this file system, there is only one directory tree for both types of storage units and both types of files.

The storage device 2 can store informative data (non-stream data) or audio/video data (stream data) in an efficient manner, avoiding a fragmentation of the hard disk, without defining a fixed area for informative data and a fixed area for audio/video data.

Advantageously, a unit of the first type split into a plurality of units of the second type can be, upon availability of all these units of the second type and according to the type of data to be stored, no more split into a plurality of units of a second type.

The bandwidth being function of the size of a data burst transfer, the less time is used for seeking the hard disk drive sectors, the higher the bandwidth. Thus, the multimedia file system 6, by managing the hard disk assembly 8 according to the type of data to be stored, limits the sectors search and therefore reduces the access time and increases the sustained bit rate.

The storage device can then be configured in accordance with the type of data to be stored and the hard disk drive occupation can be improved. This may improve the fragmentation of the disk when there are only big size files to store. These ones are stored in a big block, whereas when there are a lot of small size files to store, big size blocks are split in small size blocks as long as there is a need.

Using a file system such as the multimedia file system 6 can improve the access time to the data, as the file fragmentation is decreased.

Preferably, at least one first data structure indicates at least for each first type unit whether this unit is free or not, and whether this unit is divided into a plurality of second type storage units or not.

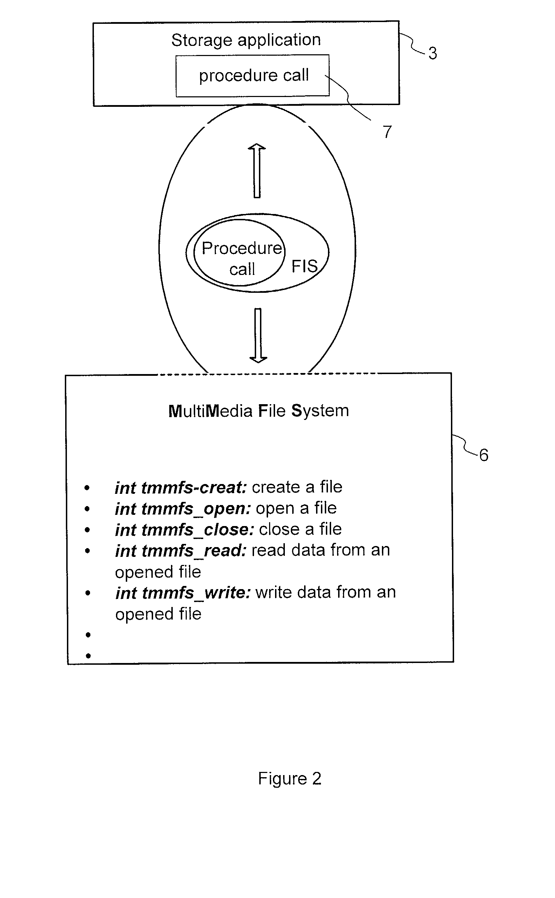

The multimedia file system 6 is controlled through the API, which mainly enables the transfer of procedure calls 7 between the host device 1 and the storage device 2. Some of the procedure calls 7 are shown later on figure 2.

The multimedia file system 6 accesses the hard disk drive through a firmware module 7. The firmware module 7 manages the low level accesses to the hard disk and to the cache memory.

The firmware module 7, the multimedia file system 6 and the hard disk assembly 8 are very close and can interact.

The hard disk assembly 8 contains standard hard disk drives, as well as cache memory (not shown separately on figure 1). Using a cache memory is a means to counterbalance the hard disk drive's lack of sustained bandwidth, mainly during access to different files.

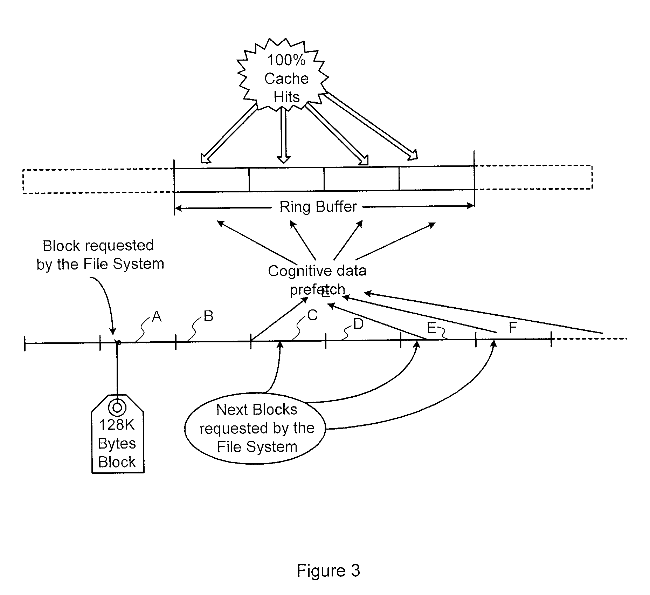

The use of the cache memory by the multimedia file system 6 is described later on figure 3.

Figure 2 represents an embodiment of the procedure calls exchanged between the multimedia file system 6 and the host storage application 3.

The procedure calls 7 are also defined as the API and are embedded in a Frame Information Structure of the SATA protocol.

Different procedures are defined among which, for instance:
Inttmmfs-creat: create a file,
Inttmmfs-open: open a file,
Inttmmfs-close: close a file,
Inttmmfs-read: read a file,
Inttmmfs-write: write a file.

According to the present embodiment, certain parameters are associated with these functions: file size, address or type of data that the file is intended to store.

The multimedia file system 6 receives these procedures calls and executes accordingly the operations on the hard disk assembly 8. The execution of the procedure calls 7 by the direct control of the file system, without the control by the host, can improve the performances of the whole system as the multimedia file system 6 has a better view of the organization of the hard disk than the host device 1.

Figure 3 represents an overview of the hard disk drive cache prefetch process used by the file system, according to the present embodiment.

The multimedia file system 6 is aware of the disk partitioning. The data are stored on the hard disk according to the strategy defined by the multimedia file system 6. Namely, the hard disk drive 8 is partitioned dynamically according to the type of data to be stored on it as mentioned above.

So, when the host device 1 requests some data for the video output 10, the multimedia file system 6 knows the address of the next data it has to output from the hard disk as it is aware of the data organization. The cache memory is then loaded with these data, as the data stored in the cache memory are the next data to be sent to the host device 1. The multimedia file system 6 itself controls data prefetching and stores as far as it is possible large blocks of data in the cache memory. This cache prefetch process is a cognitive prefetch by opposition to known statistic prefetch processes controlled by the firmware 7 of the storage means and not by the file system as in the present invention and are based on the most recent accesses and not on the requests made for data on the disk, these request containing the location of the data on the disk.

During a read access, when the host device 1 requests a file stored on the hard disk drive, the multimedia file system 6 knows that the file requested by the host device 1 is stored on sectors A, C, D, E and F. Therefore, the multimedia file system 6 will load into the cache memory these blocks one after the other and thus no useless data is loaded into the cache memory. Conventional prefetch, in opposition, loads into the cache memory the sectors contents ahead of the sector requested by the host and thus would also have loaded sector B into the cache memory.

Such cache memory management, in most of the cases, can reduce access time and provide a real time access to the data on the hard disk drive and may be of great interest in the case of video storage.

According to the present embodiment, the cache is managed as a ring buffer, but other memory management methods may also be used.

During multiple accesses, the cache memory is segmented according to the number of simultaneous accesses to the storage device.

During a write access to the hard disk drive, the file system management means 6 send a write cache command to the firmware 7 which sends the order to the cache memory, so the data to be stored are sent first to the cache memory and when the burst size is reached (for instance 128K Bytes) or when a predetermined level of filling in is reached, they are written on the hard disk drive. The write cache command is defined as a new command to control the hard disk assembly cache memory and it is thus very convenient and avoids having high capacity buffering means at the input of the storage medium as it is usually the case. A small buffer (512 bytes) may be needed to adapt the bit rate between the incoming flow and cache write.

For both read and write accesses, the heads of the hard disk drive are pre-positioned on the proper cylinder to prepare the next transfer in order to reduce the access time.

The cache memory being used by the host through the control of the Multimedia file system 6, the host device does not require extra memory, such as dynamic RAM for buffering the video data as in conventional architectures.

## Claims

1. Storage device (2) comprising storage means (8) **characterized in that** it comprises
- file system manager means (6) for managing the organization of the data stored on the storage means (8),
- interface means (4, 5) enabling a host (1) to access the storage means (8) by sending remote procedures calls (7) to the file system means (6).

2. Storage device according to claim 1 **characterized in that** it comprises cache memory shared between the storage means (8) and the host (1), the cache memory being loaded upon control of the file system manager means (6).

3. Storage device according to claim 2 **characterized in that** the file system manager means (6) control the cache memory prefetch during the accesses in read mode.

4. Storage device according to claim 2 **characterized in that** the file system manager means (6) is configured to send a write cache command to the cache memory in order that data to be stored on the storage medium (8) are first stored in the cache memory during access in write mode and transferred from the cache memory to the storage medium when the cache memory filling in has reached a predetermined level.

5. .Storage device according to any of claims 1 to 4 **characterized in that** it comprises segmentation means to partition the cache memory into several segments according to the number of simultaneous accesses to the storage means.

6. Storage device according to any of claims 1 to 5 **characterized in that** the file system manager means (6) feature a first type of storage unit for storing audio and/or video streams and a second type of storage unit for storing non-stream data, wherein the size of the first storage unit is a multiple of the size of the second storage unit, and that it further comprises means for allocating a unit of the first type either for stream storage or to split a unit of the first type into a plurality of units of the second type, for storage of non-stream data.

7. Storage device according to any of claims 1 to 6 **characterized in that** the interface means (4, 5) transport the remote procedures calls (7) from a host storage application (3) to the file system manager means (6).

8. Storage device according to any of claims 1 to 7 **characterized in that** the interface means (4, 5) are serial type interface means.

9. Storage device according to claim 8 **characterized in that** the interface means (4, 5) are compliant with the Serial Advanced Technology Attachment standard.

10. Storage device according to claim 9 **characterized in that** the interface means (4, 5) transport the remote procedures calls (7) from a host storage application (3) to the file system manager means (6) by encapsulating them in a Frame Information Structure field.

11. Multimedia terminal, preferentially a digital television, **characterized in that** it includes a storage device (2) according to any of claims 1 to 10.
